# EUROPEAN PATENT APPLICATION

(11) **EP 1 635 255 A2**
(43) Date of publication of application: **15.03.2006**
(21) Application number: 05077843.0
(22) Date of filing: 13.03.2003
(51) Int. Cl.: G06F 9/44

(54) **Information processing system**

(30) Priority: 20.03.2002 JP 2002078542; 26.03.2002 JP 2002086671
(62) Divisional of application: 03251551.2
(71) Applicant: SEIKO EPSON CORPORATION, Shinjuku-ku, Tokyo 163-0811 (JP)
(72) Inventor: Nagasaka, Fumio, Suwa-shi Nagano-ken 392-8502 (JP)
(74) Representative: Cloughley, Peter Andrew

(57) **Abstract**

An information processing system 1 of the present invention includes an information processing terminal 2, an external storage device 3, and a data communication bus 4. The information processing terminal 2 has an I/O control circuit 20, a RISC-type CPU 21, and a code morphing module 22. A code conversion selection sub-module 22a of the code morphing module 22 selects either one of code conversion sub-modules 22b and 22c, based on predetermined information stored in a configuration ROM 30b, which is set in a data memory area 30 of the external storage device 3. The code conversion selection sub-module 22a also switches over the setting used for operations of the information processing terminal 2 to an operating system corresponding to the predetermined information.

This arrangement automatically switches over setting used for operations of the information processing terminal 2 to an operating system corresponding to an information of an application program stored in the external storage device 3.

## Description

### BACKGROUND OF THE INVENTION

### 1. Field of the Invention

The present invention relates to a technique of converting program codes constructed by a different instruction set from an instruction set for a processor into codes executable by the processor.

### 2. Description of the Related Art

There is known code morphing software (CMS) that converts information codes constructed by an instruction set by one processor into information codes interpretable by another processor. In an information processing terminal with the CMS mounted thereon, a built-in processor can execute application programs designed for another processor.

The processor automatically carries out the code conversion and stores the converted codes into a main memory. In the case of re-execution of the same code information, the converted codes stored in the main memory are reused. This reduces the overhead (deterioration of the performance), due to the code conversion. The CMS is written in, for example, in a flash memory at the time of shipment of the processor, and is present in the main memory during its execution. The computer users and software developers are accordingly not aware of the presence of the CMS and can not directly operate the CMS, although there is means for updating the CWS. When significant bugs are found in the CMS, the CMS is updated to eliminate the problems without replacing the processor. Multiple CMS programs corresponding to multiple instruction sets may be mounted on the information processing terminal to be compatible with diverse processors.

Magnetic disk storage media called HDD (hard disk drive) have been advanced to the high speed and the high density and are mainly used as an external storage device of information processing terminals, such as PCs (personal computers). The initial design of the controller of the HDD focuses on machine control and logic circuit control for storing information in sectors on a magnetic disk. With remarkable advance in semiconductors, even low-cost CPUs (central processing units) for the machine control have acquired the higher throughput than the throughput of previous PCs. This leads to development of intelligent HDDs. The intelligent HDD is, for example, connected with an information processing terminal, such as a PC or a PDA (personal digital assistance), via an interface in conformity with IEEE1394 standard to allow high-speed data transfer. The intelligent HDD has both a CPU for controlling this interface and a CPU for application programs. The CPU for application programs may be used for reproduction of music data, control of a liquid crystal display, and control of user interfaces in the intelligent HDD. For example, when an application program for reproduction of music is stored in this intelligent HDD, the information processing terminal connected with the intelligent HDD can execute the application program read from the intelligent HDD.

Here the application program is, for examples, a program for editing documents, a program for browsing images, or a program for reproducing music, which is used according to the user's requirements.

The application program stored in the conventional HDD is constructed by an instruction set corresponding to a specific processor. The application program may thus be executable, for example, by an information processing terminal with a processor A mounted thereon, but not be executable by an information processing terminal with a processor B mounted thereon. In this case, different operating systems are activated on the information processing terminal with the processor A and on the information processing terminal with the processor B. The application program works only on a specific operating system and is thus not executable on any other operating systems.

One measure against such problems provides and stores application programs corresponding to a diversity of operating systems in the HDD. This method, however, takes much trouble of the developer of the application programs and wastes the memory area of the HDD. This leads to the increased cost.

In the prior art intelligent HDD, the application program recorded in the data memory area is to be fixed for a specific processor. The operations of the intelligent HDD, which is disconnected from an external device, such as a PC, and is set in the independent state, are under control of the built-in processor. For example, it is assumed that a certain application program is downloaded from the external device into the HDD. In this case, the downloaded application program should be executable by the processor of the HDD for desired operations. If the application program is activated on a specific operating system, the specific operating system is to be mounted on the application program.

### SUMMARY OF THE INVENTION

The object of the present invention is thus to provide a technique of enabling a program constructed by a specified instruction set, which is different from an instruction set of a processor, to be executed by the processor.

In order to attain at least part of the above and the other related objects, the present invention is directed to a first information processing system including an information processing terminal and an external storage device, which is connected with the information processing terminal in a data communicable manner. The information processing terminal includes: a processor; multiple code conversion modules that respectively correspond to multiple instruction sets, which are different from each other and are also different from an instruction set of the processor, each of the multiple code conversion modules converting codes constructed by the corresponding instruction set into codes executable by the processor; and a code conversion selection module that selects one code conversion module corresponding to an instruction set, which is specified by predetermined information stored in the external storage device, among the multiple code conversion modules. The selected code conversion module converts codes of a program, which is constructed by the instruction set specified by the predetermined information, into codes executable by the processor.

Another application of the present invention is a first information processing terminal that is communicated with an external storage device in a data communication manner. The first information processing terminal includes: a processor; multiple code conversion modules that respectively correspond to multiple instruction sets, which are different from each other and are also different from an instruction set of the processor, each of the multiple code conversion modules converting codes constructed by the corresponding instruction set into codes executable by the processor; and a code conversion selection module that selects one code conversion module corresponding to an instruction set, which is specified by predetermined information stored in the external storage device, among the multiple code conversion modules. The selected code conversion module converts codes of a program, which is constructed by the instruction set specified by the predetermined information, into codes executable by the processor.

In the first information processing system or the corresponding first information processing terminal of the present invention, the code conversion module corresponding to the instruction set, which is specified by the predetermined information stored in the external storage device, is selected among the multiple code conversion modules. The selected code conversion module is then activated to convert codes of a program constructed by the instruction set, which is specified by the predetermined information, into codes executable by the processor.

This arrangement enables a program constructed by an instruction set, which is different from the instruction set of the processor, to be executed by the processor, as long as the instruction set is specified by the predetermined information stored in the external storage device.

Still another application of the present invention is a first storage device having a data memory area. The first storage device includes: a processor; multiple code conversion modules that respectively correspond to multiple instruction sets, which are different from each other and are also different from an instruction set of the processor, each of the multiple code conversion modules converting codes constructed by the corresponding instruction set into codes executable by the processor; and a code conversion selection module that selects one code conversion module corresponding to an instruction set, which is specified by predetermined information stored in the data memory area, among the multiple code conversion modules. The selected code conversion module converts codes of a program, which is constructed by the instruction set specified by the predetermined information, into codes executable by the processor.

In the first storage device of the present invention, the code conversion module corresponding to the instruction set, which is specified by the predetermined information stored in the data memory area, is selected among the multiple code conversion modules. The selected code conversion module is then activated to convert codes of a program constructed by the instruction set, which is specified by the predetermined information, into codes executable by the processor.

This arrangement enables a program constructed by an instruction set, which is different from the instruction set of the processor, to be executed by the processor, as long as the instruction set is specified by the predetermined information stored in the data memory area.

The present invention is also directed to a second information processing system including an information processing terminal and an external storage device, which is connected with the information processing terminal in a mutually data communicable manner via a predetermined interface. The information processing terminal includes: multiple operating systems (OS) that respectively correspond to multiple instruction sets, which are different from each other and different from an instruction set of a processor included in the information processing terminal; and a code morphing module that converts codes constructed by each of the multiple instruction sets into codes executable by the processor of the information processing terminal. The code morphing module has OS switchover means, which automatically switches over setting to an operating system that corresponds to predetermined information read from the external storage device and is selected among the multiple operating systems. The code morphing module converts codes of the operating system selected by the OS switchover means into codes executable by the processor of the information processing terminal.

In the second information processing system of the present invention, the OS switchover means included in the code morphing module automatically switches over setting to the operating system corresponding to the predetermined information read from the external storage device. The code morphing module then converts the codes of the operating system selected by the OS switchover means into codes executable by the processor of the information processing terminal. For example, the OS switchover means switches over the setting to an operating based on code information of an application program stored in the external storage device so that the operating system corresponding to the code information is used for operations of the information processing terminal. This arrangement enables the application program stored in the external storage device to be executed on the information processing terminal, regardless of the instruction set used for producing the codes of the application program.

Here the external storage device is connectable with an information processing terminal and may be a hard disk drive, a CD-Rom drive, a DVD-ROM(RAM) drive, or an MO drive.

Another application of the present invention is a second storage device, which includes: a data memory area that stores preset data therein; a specific memory area that stores predetermined information, which is used to specify an operating system that is capable of processing the preset data stored in the data memory area; and an output module that outputs the predetermined information, which is stored in the specific memory area and is used to specify the operating system, to a preset destination.

In the second storage device of the present invention, the preset data is stored in the data memory area, and the predetermined information for specifying the operating system, which is used to process the preset data stored in the data memory area, is stored in the specific memory area. The output means outputs the predetermined information on the operating system stored in the specific memory area to the preset destination.

For example, while the second storage device is connected with the information processing terminal, the storage device outputs the predetermined information on the operating system stored in the specific memory area, in response to a requirement from the information processing terminal. The information processing terminal receives the predetermined information on the operating system and switches over the setting to the OS based on the received information.

The present invention is further directed to an external storage device that is connected with an information processing terminal in a mutually data communicable manner via a predetermined interface. The external storage device has a general data memory area and a specific memory area, which is different from the data memory area and stores predetermined information that is used to switch over setting to a selected operating system in the information processing terminal.

The external storage device has the specific memory area, in addition to the general data memory area. The OS switchover means switches over the setting to an appropriate operating system, based on the predetermined information stored in the specific memory area. For example, the specific memory area may store information on an instruction set, which is used to construct codes of an application program stored in the data memory area. In this case, the information processing terminal can readily implement the switchover of the setting to the appropriate operating system based on this information, regardless of the model of the processor and the type of the operating system corresponding to the application program stored in the data memory area.

The present invention is also directed to a third storage device having a data memory area. The third storage device includes at least: a processor that executes a preset program stored in the data memory area; data communication means that is used for data communication with an external device; a code morphing module that converts codes constituting the preset program and being constructed by one of multiple instruction sets, which are different from each other and are also different from an instruction set of the processor, into codes executable by the processor; multiple operating systems (OS) that respectively correspond to the multiple instruction sets; and OS switchover means that automatically switches over setting to an operating system, which is suitable for execution of the preset program and is selected among the multiple operating systems, based on information on the preset program, which is stored in a predetermined area of the data memory area. The code morphing module converts codes of the operating system selected by the OS switchover means into codes executable by the processor, and the processor executes the code-converted operating system.

In the third storage device of the present invention, the data communication means allows for data communication with an external device. The OS switchover means automatically switches over the setting to the operating system suitable for execution of the preset program, based on the information on the preset program, which is stored in the data memory area. The code conversion means converts the codes of the selected operating system into codes executable by the processor of the storage device. The processor then executes the code-converted operating system and activates the storage device on this operating system.

For example, it is assumed that the third storage device downloads a program from an external device via the data communication means and executes the downloaded program. When the program is constructed by one of instruction sets provided in the storage device, the storage device is activated on the operating system corresponding to this program. The code conversion means then converts the codes of this program into codes executable by the processor of the storage device. This arrangement enables a program to be downloaded from an external device and executed by the storage device, regardless of the instruction set used producing the codes of the program.

In accordance with one preferable application of the present invention, the third storage device also includes connection status detecting means that detects a connection status of the storage device with the external device and automatically sets, based on the detected connection status, either a dependent operation mode, in which the storage device is operated under control of the external device, or an independent operation mode, in which the storage device is independently operated by the processor.

The connection status detecting means detects the connection status of the storage device with the external device. When the result of detection represents connection of the storage device with the external device, the dependent operation mode is automatically set to make the storage device work as a memory unit under control of the external device. When the result of detection represents disconnection of the storage device from the external device, on the other hand, the independent operation mode is automatically set to make the processor of the storage device execute the OS and the preset program. This arrangement effectively prevents the storage device from being operated in the independent mode during connection with the external device and sending non-required data to the external device, which may result in malfunction of the external device. Simple connection of the storage device with the external device enables the storage device to work as the memory unit of the external device and allows for easy transfer of data.

The present invention is further directed to a fourth storage device having a data memory area, which includes a specific area for storing a storage device control program therein. The storage device control program includes: a data communication step that establishes data communication of the storage device with an external device; and a code conversion step that converts codes constituting a preset program and being constructed by one of multiple instruction sets, which are different from each other and are also different from an instruction set of a processor included in the storage device, into codes executable by the processor of the storage device. The code conversion step automatically switches over setting to an operating system, which is suitable for execution of the preset program and is selected among multiple operating systems respectively corresponding to the multiple instruction sets, based on information on the preset program, which is stored in a predetermined area of the data memory area. The code conversion step then converts codes of the selected operating system into codes executable by the processor of the storage device.

This arrangement effectively prevents the storage device control program from being deleted or destroyed through an operation of an external device.

The present invention is also directed to a computer readable recording medium, in which a rewriting program is recorded. The rewriting program includes a rewriting step that rewrites storage contents of a protective area, which is included in a data memory area of an external storage device and represents a specific area for storing a preset program executed by a processor of the external storage device.

For example, when the rewriting program is mounted on an external device, the rewriting program is executed to write an application program stored in the external device into the protective area of the data memory area and to rewrite the preset program stored in the protective area. In another example, the rewriting program is executed to rewrite the preset program stored in the protective area with a differential file stored in the external device, so as to attain version upgrade of the preset program.

The present invention is not restricted to the information processing systems, the information processing terminals, or the storage devices discussed above, but may be actualized by corresponding methods like an information processing method. Other applications of the present invention include computer programs that actualize the information processing systems, the information processing terminals, the storage devices, and the corresponding methods, recording media in which such computer programs are recorded, and data signals that include such computer programs and are embodied in carrier waves.

The above and other objects, features, aspects, and advantages of the present invention will become more apparent from the following detailed description of the preferred embodiments with the accompanying drawings.

### BRIEF DESCRIPTION OF THE DRAWINGS

Fig. 1 is a block diagram illustrating the construction of an information processing system in a first embodiment of the present invention;
Fig. 2 is a flowchart showing a processing routine executed at the time of activation of an external storage device shown in Fig. 1;
Fig. 3 is a flowchart showing a processing routine to activate an information processing terminal shown in Fig. 1;
Fig. 4 is a flowchart showing a processing routine executed by a code conversion module of Fig. 1 in the course of executing an application program after the activation of the information processing terminal of Fig. 1;
Fig. 5 is a block diagram illustrating the construction of another information processing system including an external storage device in a second embodiment of the present invention;
Fig. 6 is a flowchart showing a processing routine to set an operation mode executed by the connection status detecting function of the external storage device shown in Fig. 5;
Fig. 7 is a flowchart showing a processing routine in an independent operation mode executed by the external storage device of Fig. 5; and
Fig. 8 is a block diagram illustrating the construction of a printing system, in which the external storage device of Fig. 5 is connected with a printer device.

### DESCRIPTION OF THE PREFERRED EMBODIMENTS

Some modes of carrying out the invention are discussed below as preferred embodiments.

### A. First Embodiment

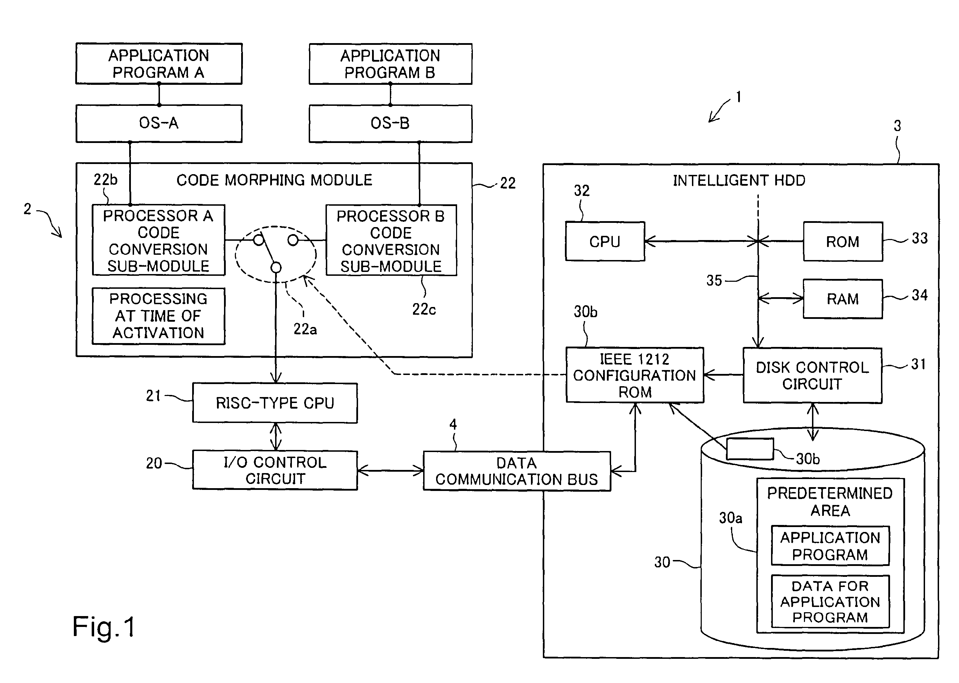

A first embodiment of the present invention is discussed with reference to Figs. 1 through 4.

Fig. 1 is a block diagram illustrating the construction of an information processing system 1 in the first embodiment of the present invention.

The information processing system 1 includes an information processing terminal 2, an external storage device 3, and a data communication bus 4.

The information processing terminal 2 includes an I/O control circuit 20, an RISC (reduced instruction set computer)-type CPU 21, and a code morphing module 22 and has two operating systems, OS·A and OS-B.

The I/O control circuit 20 controls data transmission between the information processing terminal 2 and the external storage device 3 via the data communication bus 4.

The RISC-type CPU 21 is designed to enhance the efficiency of the pipeline processing and improve the processing performance by simplification of individual instructions, and has various programs to be executed in the information processing terminal 2.

The code morphing module 22 includes a code conversion selection sub-module 22a, a processor A code conversion sub-module 22b, and a processor B code conversion sub-module 22c.

The code conversion selection sub-module 22a selects either one of the processor A code conversion sub-module 22b and the processor B code conversion sub-module 22c according to the storage contents of a configuration ROM 30b (discussed later), and switches over the setting between the OS-A and the OS-B.

The processor A code conversion sub-module 22b converts the codes constructed by an instruction set of a processor A (an application program A shown in Fig. 1), which is a CISC (complex instruction set computer)-type processor that makes individual instructions approach to a high level language to allow execution of complicated processing and thereby improve the processing performance, into codes executable by the RISC-type CPU 21.

The processor B code conversion sub-module 22c converts the codes constructed by an instruction set of a CISC-type processor B (an application program B shown in Fig. 1) into codes executable by the RISC-type CPU 21.

The external storage device 3 has a data memory area 30, a Disk control circuit 31, a CPU 32, a ROM 33, a RAM 34, and a bus 35.

The data memory area 30 is a mass storage area for storing predetermined data therein. The data memory area 30 includes a predetermined area 30a, in which an objective application program and data relating to the application program are stored, and a configuration ROM 30b, which is mapped in conformity with the IEEE 1212 standard in a separate area from the predetermined area 30a.

The Disk control circuit 31 controls operations of writing data into the data memory area 30 and of reading data from the data memory area 30.

Here the application program is, for examples, a program for editing documents, a program for browsing images, or a program for reproducing music, which is used according to the user's requirements.

The configuration ROM 30b is mapped in conformity with the IEEE 1212 standard in a specified address space in the data memory area 30. In this embodiment, the model of the processor and the type of the OS, which can execute the application program stored in the predetermined area 30a of the data memory area 30, are written in the configuration ROM 30b. Various pieces of information, for example, the production number and the company name, may additionally be written in the configuration ROM 30b. In the structure of the embodiment, a specific region of the predetermined area 30a for actually storing the application program and a preset area in the configuration ROM 30b may be protected to prevent the data stored therein from being rewritten through the operations of the information processing terminal 2.

The CPU 32 executes a program stored in the ROM 33, in order to execute an application program stored in the predetermined area 30a of the data memory area 30 or to write the model of the processor and the type of the OS, which can execute the application program, in the configuration ROM 30b at the time of activation of the external storage device 3, based on the information of the application program stored in the predetermined area 30a of the data memory area 30. The CPU 32 also controls data transmission between the external storage device 3 and the information processing terminal 2 via the data communication bus 4, as discussed later.

The ROM 33 is a read only storage medium that stores programs and data required for execution of the application program, writing of activation information into the configuration ROM 30b, and control of data communication via the data communication bus 4, and is constructed by, for example, a non-volatile memory.

The RAM 34 is a rewritable storage medium that temporarily stores data required for execution of the programs, and is constructed by, for example, a volatile memory.

The bus 35 is a data transmission path used for data transmission between the respective elements like the CPU 32.

In the structure of this embodiment, the external storage device 3 is an intelligent external memory device, where the CPU 32 built therein can independently execute application program. In addition to the elements discussed above, a power source unit for independent operations as well as a speaker, a control unit, a liquid crystal display, and other required elements according to executable application programs are appropriately mounted on the external storage device 3.

The data communication bus 4 is used for data transmission between the information processing terminal 2 and the external storage device 3, and is in conformity with the IEEE 1394 standard in this embodiment.

The concrete operations of the information processing system 1 are discussed below. In response to a supply of power to the external storage device 3, the built-in CPU 32 reads a program for rewriting the contents of the configuration ROM 30b, from the ROM 33. The CPU 32 executes the read-out program to read the codes of an application program stored in the predetermined area 30a of the data memory area 30 and analyze the codes. The CPU 32 then identifies the type of an instruction set constructing the codes and specifies the model of the processor, based on the results of the analysis. The CPU 32 subsequently specifies the type of the OS executable by the specified model of the processor, and writes information regarding the model of the process and the type of the OS that can execute the application program into the configuration ROM 30b.

The information processing terminal 2 is activated in the following manner, while the external storage device 3 including the configuration ROM 30b with the information written therein is connected with the information processing terminal 2 via the data communication bus 4 that is in conformity with the IEEE 1394 standard. In response to a supply of power to the information processing terminal 2, the RISC-type CPU 21 included in the information processing terminal 2 reads the contents of the configuration ROM 30b of the external storage device 3 via the data communication bus 4. The RISC-type CPU 21 can read the storage contents of the configuration ROM 30b that is in conformity with the IEEE 1212 standard via the data communication bus 4 that is in conformity with the IEEE 1394 standard. The RISC-type CPU 21 accordingly reads the information regarding the model of the processor and the type of the OS from the configuration ROM 30b, and stores the information into a RAM (not shown) included in the information processing terminal 2 via the I/O control circuit 20. The RISC-type CPU 21 then activates the code morphing module 22, which carries out a series of processing based on the information regarding the model of the processor and the type of the OS. In the structure of the embodiment, as shown in Fig. 1, the code conversion selection sub-module 22a of the code morphing module 22 selects either one of the processor A code conversion sub-module 22b and the processor B code conversion sub-module 22c to be used for code conversion, based on the model of the processor and the type of the OS. The code conversion selection sub-module 22a also selects either one of the OS-A, that is, the OS for the processor A, and the OS-B, that is, the OS for the processor B, as the activated setting according to the selected code conversion sub-module. The code morphing module 22 then carries out the code conversion with the code conversion sub-module 22b or 22c and the OS selected by the code conversion selection sub-module 22a. The RISC-type CPU 21 executes the code-converted OS. This completes activation of the information processing terminal 2.

After activation of the information processing terminal 2, the application program stored in the predetermined area 30a of the external storage device 3 is subjected to the code conversion process. The application program stored in the predetermined area 30a of the data memory area 30 in the external storage device 3 is read out via the data communication bus 4, in response to an operation on the activated OS.

The read-out application program consists of the codes constructed by the instruction set that is not executable by the RISC-type CPU 21. The code conversion sub-module 22b or 22c selected by the code conversion selection sub-module 22a thus converts the codes of the read-out application program into codes executable by the RISC-type CPU 21. The RISC-type CPU 21 executes the code-converted application program on the activated OS.

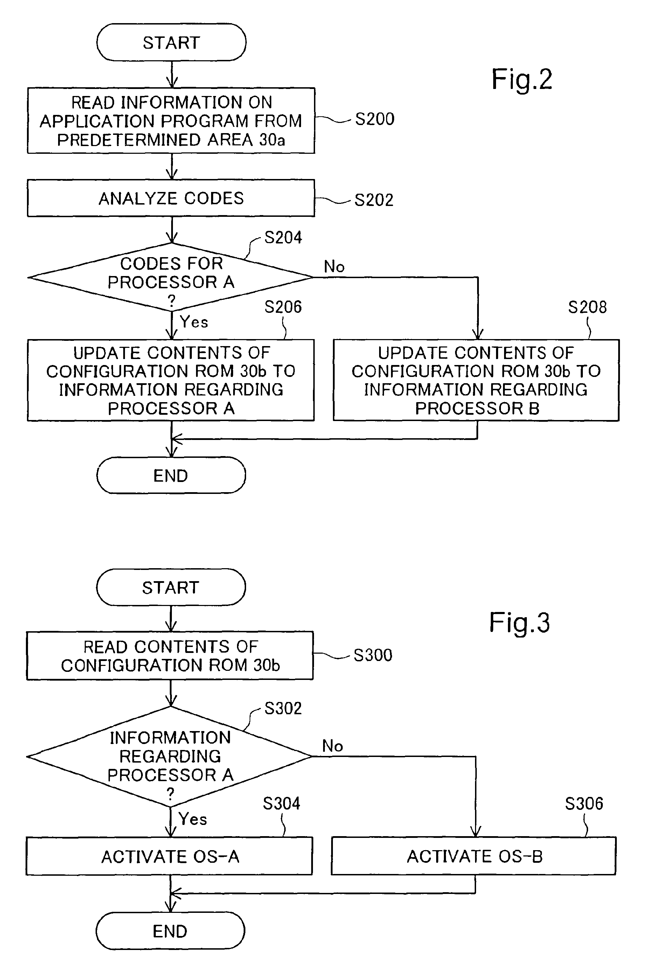

The series of processing executed at the time of activation of the external storage device 3 is discussed below with reference to the flowchart of Fig. 2.

When the program enters the processing routine of Fig. 2, the CPU 32 first executes a certain program and reads the information on the application program from the predetermined area 30a of the data memory area 30 via the Disk control circuit 31 at step S200.

At subsequent step S202, the CPU 32 analyzes the codes of the read-out information on the application program.

The program then proceeds to step S204, at which the CPU 32 determines whether or not the codes of the application program are constructed by the instruction set for the processor A, based on the results of the analysis. In the case of the codes for the processor A, that is, in the case of an affirmative answer at step S204, the program goes to step S206. Otherwise, that is, in the case of a negative answer at step S204, the program goes to step S208.

At step S206, the CPU 32 writes the information with regard to the processor A in the configuration ROM 30b. The program then exists from this processing routine. In the structure of this embodiment, the information is written at a specific address in the configuration ROM 30b. When there has already been the information at the specified address, new pieces of information are written over the existing information. The information written here includes the information regarding the processor A that can execute the application program, and the information regarding the type of the OS that corresponds to the processor A and can execute the application program.

When it is determined at step S204 that the codes of the application program are not the codes for the processor A, on the other hand, the CPU 32 writes the information with regard to the processor B in the configuration ROM 30b at step S208. The program then exits from this processing routine.

The arrangement of the embodiment is effectively applicable to the case in which the application program constructed by the instruction set of either the processor A or the processor B is stored in the predetermined area 30a of the data memory area 30. When the application program is constructed by another instruction set, the information with regard to the processor B is written into the configuration ROM 30b.

The series of processing to activate the information processing terminal 2 is discussed below with reference to the flowchart of Fig. 3.

When the program enters the processing routine of Fig. 3, the RISC-type CPU 21 first reads the storage contents of the configuration ROM 30b in the external storage device 3 via the data communication bus 4 at step S300.

At subsequent step S302, the code morphing module 22 determines whether or not the read-out storage contents represent the information regarding the processor A. In the case of the information regarding the processor A, that is, in the case of an affirmative answer at step S302, the program goes to step S304. Otherwise, that is, in the case of a negative answer at step S302, the program goes to step S306.

At step S304, the code conversion selection sub-module 22a selects the processor A code conversion sub-module 22b to switch over the setting of code conversion to the OS-A for the processor A and activate the code-converted OS-A. The program then exits from this activation routine.

When it is determined at step S302 that the storage contents do not represent the information regarding the processor A, on the other hand, the code conversion selection sub-module 22a selects the processor B code conversion sub-module 22c to switch over the setting of code conversion to the OS-B for the processor B and activate the code-converted OS-B at step S306. The program then exits from this activation routine.

Once the OS is subjected to the code conversion process, the code-converted OS is stored. This arrangement ensures high-speed activation of the code-converted OS.

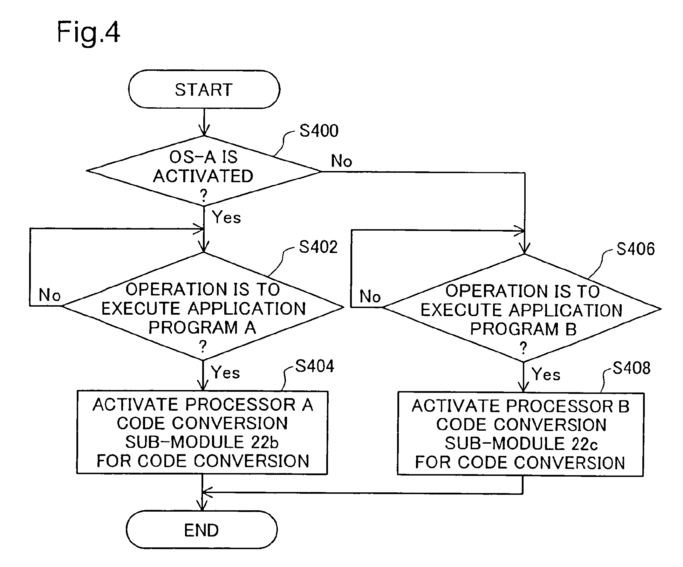

The series of processing executed by the code morphing module 22 in the course of execution of the application program after activation of the information processing germinal 2 is discussed below with reference to the flowchart of Fig. 4.

When the program enters the processing routine of Fig. 4, the code morphing module 22 first determines whether or not the processor A code conversion sub-module 22b has been selected to switch over the setting of code conversion to the OS-A at step S400. In the case of the setting of code conversion to activate the OS-A, that is, in the case of an affirmative answer at step S400, the program goes to step S402. Otherwise, that is, in the case of a negative answer at step S400, the program goes to step S406.

At step S402, the code morphing module 22 determines whether or not a disk management operation on the selected OS·A is performed to execute an application program that is executable by the processor A and is stored in the predetermined area 30a of the data memory area 30 in the external storage device 3 (hereafter referred to the application program A). In the case of the execution operation for the application program A, that is, in the case of an affirmative answer at step S402, the program goes to step S404. Otherwise, that is, in the case of a negative answer at step S402, the program waits for an execution operation for the application program A.

At step S404, the processor A code conversion sub-module 22b works to convert the codes of the application program A into codes executable by the RISC-type CPU 21. The program then exits from this processing routine.

When it is determined at step S400 that the setting of code conversion is not for activation of the OS-A, the OS-B is set as the object of code conversion. The code morphing module 22 determines whether or not a disk management operation on the selected OS-B is performed to execute an application program that is executable by the processor B and is stored in the predetermined area 30a of the data memory area 30 in the external storage device 3 (hereafter referred to the application program B) at step S406. In the case of the execution operation for the application program B, that is, in the case of an affirmative answer at step S406, the program goes to step S408. Otherwise, that is, in the case of a negative answer at step S406, the program waits for an execution operation for the application program B.

At step S408, the processor B code conversion sub-module 22c works to convert the codes of the application program B into codes executable by the RISC-type CPU 21. The program then exits from this processing routine.

According to the series of processing at steps S400 through S408, the code morphing module 22converts the codes of the application program, which is stored in the predetermined area 30a of the data memory area 30 in the external storage device 3, into the codes executable by the RISC-type CPU 21 of the information processing terminal 2. The RISC-type CPU 21 can thus execute the code-converted application program and utilize the data for the application program stored in the predetermined area 30a.

In the structure of the embodiment, the external storage device 3 is the intelligent external memory device that can independently execute the application program stored in the predetermined area 30a. The external storage device 3 may thus be separated from the system and dynamically used to fetch data for an application program from another information processing terminal or fetch an application program executable by the external storage device 3. When terminals having the functions of the information processing terminal 2 discussed above become popular, for example, the external storage device 3 may be connected with a terminal at an outside place and cause the application program stored in the predetermined area 30a of the data memory area 30 in the external storage device 3 to be executed on the terminal. In this case, it is not required to take account of the model of the processor or the type of the OS corresponding to the application program.

In the structure of this embodiment discussed above, the information regarding the model of the processor and the type of the OS that can execute the application program, which is stored in the predetermined area 30a of the data memory area 30 in the external storage device 3, is written in the configuration ROM 30b. Based on the storage contents of the configuration ROM 30b, the code conversion selection sub-module 22a of the code morphing module 22 selects the code conversion sub-module 22b or 22c to switch over the OS activated on the information processing terminal 2 to the selected OS that can execute the application program. The application program can thus be executed on the appropriate OS by normally activating the information processing terminal 2, regardless of the instruction set used for production of the application program stored in the external storage device 3.

At the time of activation, the external storage device 3 writes the information regarding the model of the processor and the type of the OS, which can execute the application program stored in the predetermined area 30a, into the configuration ROM 30b. When the application program stored in the predetermined area 30a has been subjected to the code conversion to another instruction set, the information on the model of the processor and the type of the OS is updated at the time of activation of the external storage device 3. This arrangement effectively prevents the information processing terminal 2 from being activated with a wrong OS.

The data communication bus 4 shown in Fig. 1 corresponds to the predetermined interface of the claims, and the RISC-type CPU 21 corresponds to the processor of in the claims. The code morphing module 22 corresponds to the code morphing module of the claims. The code conversion selection sub-module 22a corresponds to the code conversion selection module or the OS switchover means of the claims. The processor A code conversion sub-module 22b and the processor B code conversion sub-module 22c correspond to the multiple code conversion modules of the claims. The configuration ROM 30b corresponds to the specified memory area of claims. The process of reading information on the application program from the predetermined area 30a executed by the CPU 32 corresponds to the application program information reading means of the claims. The process of writing information required for switchover of the active OS into the configuration ROM 30b corresponds to the information writing means of the claims.

In the structure of this embodiment, the two different instruction sets for the processor A and the processor B can be subjected to the code conversion carried out by the code morphing module 22 of the information processing terminal 2. This is, however, not restrictive at all, and three or a greater number of instruction sets for the respective processors may be subjected to the code conversion.

In the structure of the first embodiment, the information written in the configuration ROM 30b at the time of activation of the external storage device 3 (that is, the information regarding the model of the processor and the type of the OS that can execute the application program stored in the predetermined area 30a) relates to only the two different processors, the processor A and the processor B, and the two different operating systems, the OS-A and the OS-B. This is, however, not restrictive at all, and the information written in the configuration ROM 30b may relate to any processors and operating systems selected among general-purpose and specific-purpose processors and versatile and non-versatile operating systems that can execute the application program.

In the structure of the embodiment, the bus designed in conformity with the IEEE 1394 standard is applied for the data communication bus 4 that allows for data communication between the information processing terminal 2 and the external storage device 3. This is, however, not restrictive at all, and another interface bus, such as an SCSI (small computer system interface) bus or a USB (universal serial bus), may be applied for the data communication.

In the structure of the embodiment, the intelligent external memory device is applied for the external storage device 3. This is, however, not restrictive at all, and a non-intelligent external memory device, such as a conventional hard disk, may be use for the external storage device 3. In the settings of this modified application, the information required for switchover of the active OS is stored in a specific memory area in the non-intelligent external memory device. The information processing system 2 reads the storage contents from the specific memory area and switches over the active OS.

In the structure of the embodiment, the information regarding both of the model of the processor and the type of the OS that can execute the application program is written in the configuration ROM 30b. This is, however, not restrictive at all. Any information that enables the code conversion selection sub-module 22a of the code morphing module 22 in the information processing terminal 2 to carry out the switchover of the active OS may be written in the configuration ROM 30b. For example, only a required minimum piece of information, that is, either the model of the processor or the type of the OS, may be written in the configuration ROM 30b.

### B. Second Embodiment

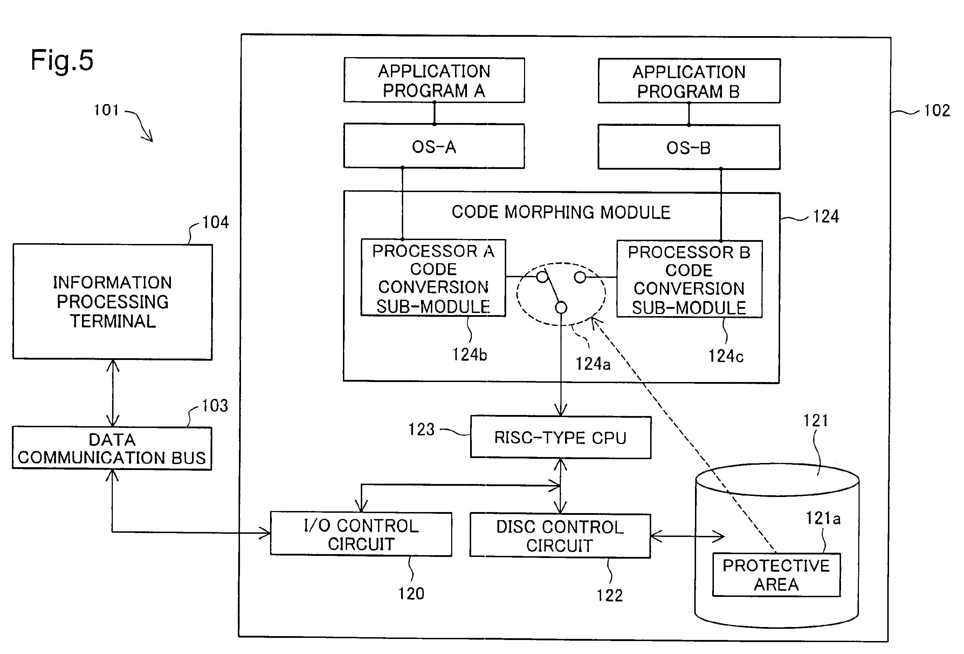

A second embodiment of the invention is discussed below with reference to Figs. 5 through 8.

Fig. 5 is a block diagram illustrating the construction of another information processing system 101 including an external storage device 102 in the second embodiment of the present invention.

The information processing system 101 includes the external storage device 102, a data communication bus 103, and an information processing terminal 104.

The external storage device 102 includes an I/O control circuit 120, a data memory area 121, a Disk control circuit 122, a RISC (reduced instruction set computer)-type CPU 123, and a code morphing module 124.

The I/O control circuit 120 controls data transmission to and from the information processing terminal 104 via the data communication bus 103, and also functions to determine whether or not the external storage device 102 is connected with an external device. In the structure of the second embodiment, the I/O control circuit 120 detects the status of the external storage device 102 connecting with or disconnecting from the information processing terminal 104. In response to detection of the connecting status, the I/O control circuit 120 fetches attribute information from the information processing terminal 104 and specifies the setting of the external storage device 102 in either an independent operation mode or a dependent operation mode, based on the connecting status and the fetched attribute information. The attribute information here is a distinct piece of information to discriminate an independent device, such as a PC or a PDA, from a dependent device, such as a printer or a scanner, under control of an independent device.

The data memory area 121 is a mass storage area for storing predetermined data therein, and includes a protective area 121a, in which an objective application program executable by the external storage device 102 is stored. The application program stored in the protective area 121a is protected to be rewritable only by an exclusive rewriting program (discussed later). Any information processing terminal without this exclusive rewriting program is allowed to only read the application program stored in the protective area 121a.

The Disk control circuit 122 carries out Disk access control, that is, controls operations of writing data into the data memory area 121 and of reading data from the data memory area 121.

The RISC-type CPU 123 is designed to enhance the efficiency of the pipeline processing and improve the processing performance by simplification of individual instructions, and has various programs to be executed in the external storage device 102.

The code morphing module 124 includes a code conversion selection sub-module 124a, a processor A code conversion sub-module 124b, and a processor B code conversion sub-module 124c.

The code conversion selection sub-module 124a selects either one of the processor A code conversion sub-module 124b and the processor B code conversion sub-module 124c according to the storage contents of the protective area 121a, and switches over the setting between the OS-A and the OS-B to activate the external storage device 102.

The processor A code conversion sub-module 124b converts the codes constructed by an instruction set of a processor A (that is, an application program A shown in Fig. 5), which is a CISC (complex instruction set computer)-type processor that makes individual instructions approach to a high level language to allow execution of complicated processing and thereby improve the processing performance, into codes executable by the RISC·type CPU 123.

The processor B code conversion sub-module 124c converts the codes constructed by an instruction set of a CISC-type processor B (that is an application program B shown in Fig. 5) into codes executable by the RISC-type CPU 123.

In the structure of the second embodiment, the codes of the OS and the application program converted by the code morphing module 124 are stored in the main memory of the external storage device 102. When the same OS or the same application program is selected again for the code conversion, the converted codes stored in the main memory are reused. This desirably reduces the overhead (deterioration of the performance), due to the code conversion.

The external storage device 102 stores an exclusive rewriting program, which is used to rewrite the application program stored in the protective area 121a of the data memory area 121, as mentioned previously.

The data communication bus 103 is used for data transmission between the external storage device 102 and the information processing terminal 104, and may be any of a bus in conformity with the IEEE 1394 standard, an SCSI (small computer system interface) bus, or a USB (universal serial bus).

The information processing terminal 104 is an independent device, such as a PC or a PDA, and includes a storage device for storing programs and data, a CPU executing the programs stored in the storage device, and a RAM for temporarily storing data used for execution of the programs. The information processing terminal 4 also stores the exclusive rewriting program, which is used to rewrite the application program stored in the protective area 121a of the data memory area 121 in the external storage device 102.

The concrete operations of the information processing system 101 are discussed below. In response to a supply of power to the external storage device 102, the I/O control circuit 120 activates its connection status detecting function to detect the status of the external storage device 102 connecting with or disconnecting from an external device, that is, the information processing terminal 104. When the result of the detection represents the status of connection with the information processing terminal 104 and the attribute information fetched from the connected information processing terminal 104 represents an independent device, the external storage device 102 is set in the dependent operation mode. In the dependent operation mode, the external storage device 102 hands the control to the information processing terminal 104 and works as a secondary storage device of the information processing terminal 104. In this case, the access operation, for example, the operation of writing data into the data memory area 121 of the external storage device 102, is carried out in response to a control signal transmitted from the information processing terminal 104. The information processing terminal 104 accordingly controls the operation of writing predetermined data into the data memory area 121 of the external storage device 102 and the operation of reading predetermined data from the data memory area 121 via the data communication bus 103.

While the external storage device 102 is set in the dependent operation mode, the information processing terminal 104 may execute the exclusive rewriting program to rewrite the application program stored in the protective area 121 of the data memory area 121. Execution of the exclusive rewriting program may write another application program stored in the information processing terminal 104 over the application program stored in the protective area 121a or may delete the application program stored in the protective area 121a.

When the connection status detecting function of the I/O control circuit 120 detects the disconnecting status from the information processing terminal 104, on the other hand, the external storage device 102 is set in the independent operation mode. In the independent operation mode, the code conversion selection sub-module 124a of the code morphing module 124 reads the information regarding the application program stored in the protective area 121a of the data memory area 121 via the Disk control circuit 122. The code conversion selection sub-module 124a specifies the type of the OS to be activated, based on the read-out information, and selects the code conversion sub-module 124b or 124c corresponding to the selected OS. According to the concrete procedure, the code conversion selection sub-module 124a identifies the type of the instruction set used for production of the codes of the application program stored in the protective area 121a, that is, either the instruction set for the processor A or the instruction set for the processor B. The code conversion selection sub-module 124a then selects either the processor A code conversion sub-module 124b or the processor B code conversion sub-module 124c to be activated for code conversion, and also switches over the active OS between the OS-A and the OS-B, based on the result of the identification.

The code conversion sub-module 124b or 124c of the code morphing module 124, which is selected by the code conversion selection sub-module 124a, makes the OS-A or the OS-B, which is set by the code conversion selection sub-module 124a, subjected to code conversion. The RISC-type CPU 123 executes the code-converted OS. This completes activation of the external storage device 102.

At this moment, the OS corresponding to the application program stored in the protective area 121a of the data memory area 121 becomes active in the external storage device 102. The selected code conversion sub-module 124b or 124c carries out the code conversion of the application program on the active OS. The RISC-type CPU 123 then executes the code-converted application program.

While the external storage device 102 is disconnected from the information processing terminal 104, the RISC-type CPU 123 of the external storage device 102 independently executes the application program stored in the protective area 121a of the data memory area 121.

In addition to the elements discussed above, a power source unit for independent operations as well as a speaker, a control unit, a liquid crystal display, and other required elements according to executable application programs are appropriately mounted on the external storage device 102.

In the structure of the second embodiment, the external storage device 102 is capable of writing another application program stored in a different place from the protective area 121a in the data memory area 121 over the application program stored in the protective area 121a, according to the exclusive rewriting program stored therein.

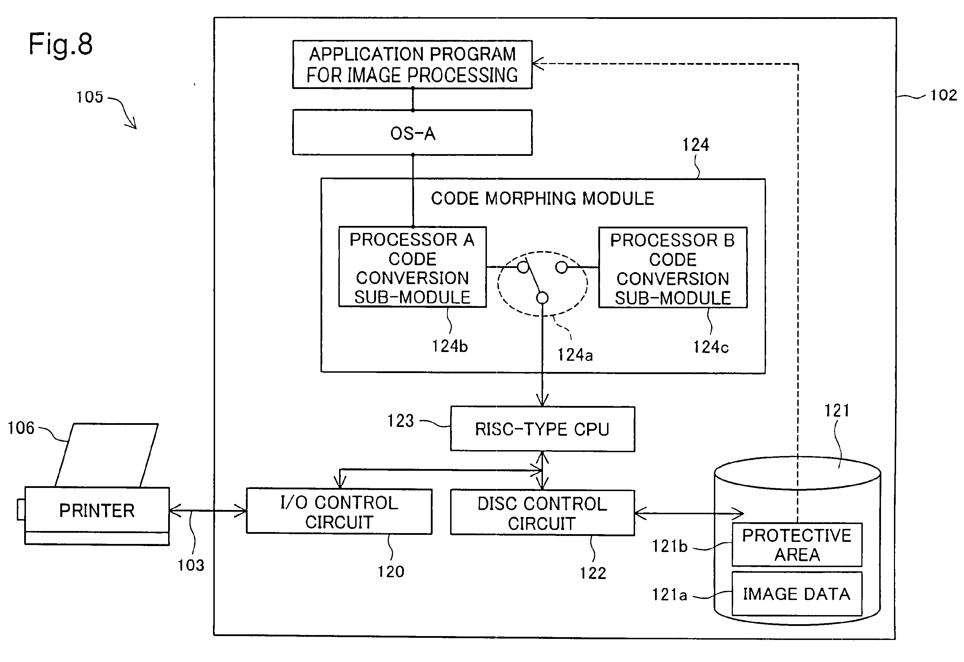

The external storage device 102 of the second embodiment may be connected with a printer device to construct a printing system. In this printing system, the data memory area 121 includes the protective area 121a that stores an application program for controlling the printer device, which has been written in advance by the information processing terminal 104, and a predetermined area that is different from the protective area 121a and stores image data, which has been written in advance by the information processing terminal 104. Fig. 8 is a block diagram illustrating the construction of a printing system 105, in which the external storage device 102 of the second embodiment is connected with a printer device 106.

The printing system 105 includes the external storage device 102 and the printer device 106, which are connected with each other via the data communication bus 103.

The external storage device 102 and the data communication bus 103 included in the printing system 105 are identical with those included in the information processing system 101 of the second embodiment shown in Fig. 5 and are thus not specifically described.

The printer device 106 is constructed by the same technique as that of known printers. According to the application program for controlling the printer device executed by the external storage device 102, the printer device 106 receives print data transmitted from the external storage device 102 and prints an image on a printing medium based on the input print data.

The concrete operations of the printing system 105 are discussed briefly. In response to a supply of power to the external storage device 102, the I/O control circuit 120 activates its connection status detecting function to detect the status of the external storage device 102 connecting with or disconnecting from an external device, that is, the printer device 106. When the result of the detection represents the status of connection with the printer device 106 and the attribute information fetched from the connected printer device 106 represents a dependent device, the external storage device 102 is set in the independent operation mode. In the independent operation mode, the application program for controlling the printer device stored in the protective area 121a of the data memory area 121 is automatically executed on the selected active OS. The execution of the application program causes the printer device 106 to print the image data stored in the predetermined area of the data memory area 121.

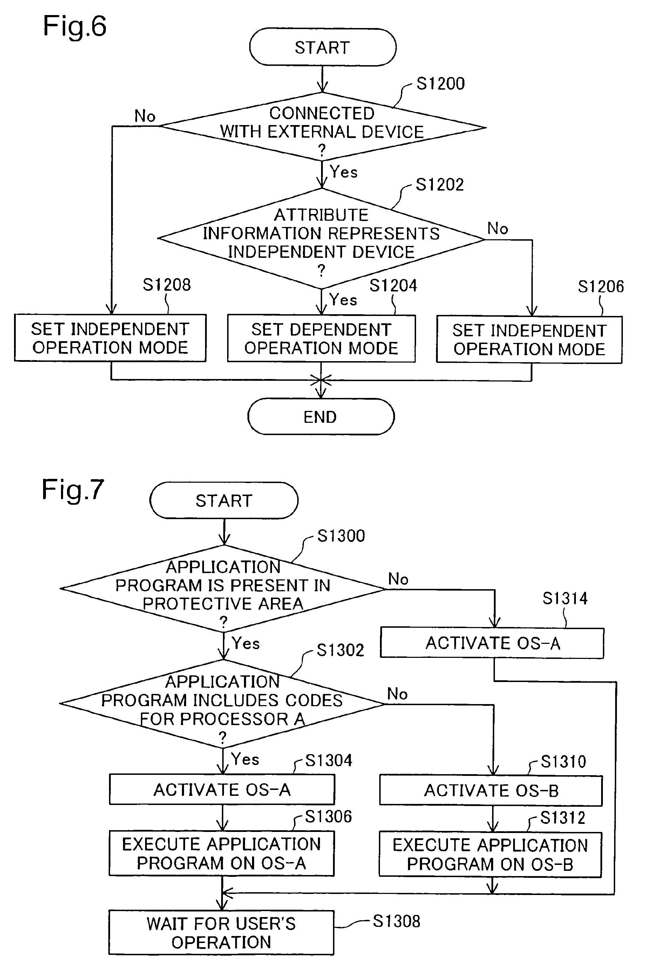

The series of processing to set the operation mode executed by the connection status detecting function of the external storage device 102 is discussed below with reference to the flowchart of Fig. 6.

When the program enters the processing routine of Fig. 6, the connection status detecting function of the I/O control circuit 120 first determines whether or not the external storage device 102 is connected with or disconnected from an external device at step S1200. In the case of the connecting status, that is, in the case of an affirmative answer at step S1200, the program goes to step S1202. Otherwise, that is, in the case of a negative answer at step S1200, the program goes to step S1208.

At step S1202, the connection status detecting function determines whether or not the attribute information fetched from the external device represents an independent device. In the case of the independent device, that is, in the case of an affirmative answer at step S1202, the program goes to step S1204. Otherwise, that is, in the case of a negative answer at step S1202, the program goes to step S1206.

At step S1204, the connection status detecting function sets the external storage device 102 in the dependent operation mode. The program then exists from this processing routine.

When it is determined at step S1202 that the attribute information fetched from the external device does not represent the independent device, the connection status detecting function sets the external storage device 102 in the independent operation mode at step S1206. The program then exits from this processing routine.

When it is determined at step S1200 that the external storage device 102 is disconnected from the external device, the connection status detecting function also sets the external storage device 102 in the independent operation mode at step S1208. The program then exits from this processing routine.

The series of processing in the independent operation mode executed by the external storage device 102 is discussed below with reference to the flowchart of Fig. 7.

When the program enters the processing routine of Fig. 7, the external storage device 102 first determines whether or not the application program has been stored in advance in the protective area 121a of the data memory area 121 at step S1300. When the application program is present in the protective area 121a, that is, in the case of an affirmative answer at step S1300, the program goes to step S1302. Otherwise, that is, in the case of a negative answer at step S1300, the program goes to step S1314.

At step S1302, the external storage device 102 determines whether or not the codes for the processor A are included in the application program read from the protective area 121a. When the application program includes the codes for the processor A, that is, in the case of an affirmative answer at step S1302, the program goes to step S1304. Otherwise, that is, in the case of a negative answer at step S1302, the program goes to step S1310.

The external storage device 102 activates the OS-A at step S1304. According to the concrete procedure of step S1304, the code conversion selection sub-module 124a selects the processor A code conversion sub-module 124b and the OS-A corresponding to the application program A. The RISC-type CPU 23 then activates the selected OS-A in the following manner. The processor A code conversion sub-module 124b converts the codes of the OS-A into the codes executable by the RISC-type CPU 123, and the RISC-type CPU 23 executes the code-converted OS-A. This completes activation of the selected OS-A.

The external storage device 102 executes the application program A stored in the protective area 121 on the activated OS-A at step S1306, and the program then proceeds to step S1308. In the structure of this embodiment, only one application program, that is, either the application program A or the application program B, is recorded in the protective area 121a. The application program corresponding to the selected OS is automatically executed on the activated OS.

The external storage device 102 then waits for the user's operation on the activated OS or the executed application program at step S1308.

When it is determined at step S1302 that the application program read from the protective area 121 does not include the codes for the processor A, on the other hand, the external storage device 102 activates the OS-B at step S1310. According to the concrete procedure of step S1310, the code conversion selection sub-module 124a selects the processor B code conversion sub-module 124c and the OS-B corresponding to the application program B. The RISC-type CPU 23 then activates the selected OS-B in the following manner. The processor B code conversion sub-module 124c converts the codes of the OS-B into the codes executable by the RISC-type CPU 123, and the RISC-type CPU 23 executes the code-converted OS-B. This completes activation of the selected OS-B.

The external storage device 102 executes the application program B stored in the protective area 121 on the activated OS-B at step S1312, and the program then proceeds to step S1308.

When it is determined at step S1300 that no application program is present in the protective area 121a, the external storage device 102 activates the OS-A at step S1314. The program then proceeds to step S1308.

As discussed above, in the structure of the external storage device 102 of the second embodiment, the code conversion selection sub-module 124a of the code morphing module 124 selects the code conversion sub-module 124b or 124c to be activated, based on the code information of the application program stored in the protective area 121a of the data memory area 121, and specifies the OS that can execute the application program and is used to activate the external storage device 102. Activation of the external storage device 102 in the independent operation mode enables the application program to be executed on the appropriate OS, irrespective of the instruction set of the codes constituting the application program stored in the external storage device 102.

The external storage device 102 detects the connection status with an external device and automatically sets either the independent operation mode or the dependent operation mode, based on the result of the detection. This arrangement desirably saves the user's labor and time for manual setting and enables the external storage device 102 to be readily used through simple connection with an external device.

The application program executed by the external storage device 102 is stored in the protective area 121a of the data memory area 121. This arrangement effectively prevents the application program from being deleted or destroyed by, for example, malfunction of the external device.

The contents of the protective area 121a are rewritable by the exclusive rewriting program. This arrangement enables the application program executed by the external storage device 102 to be modified or upgraded to a new version.

The code morphing module 124 shown in Fig. 5 corresponds to the code morphing module of the claims. The code conversion selection sub-module 124a corresponds to the code conversion selection module or the OS switchover means of the claims. The processor A code conversion sub-module 124b and the processor B code conversion sub-module 124c correspond to the multiple code conversion modules of the claims. The data communication bus 103 corresponds to the data communication means of the claims.

In the structure of the second embodiment, the two different instruction sets for the processor A and the processor B can be subjected to the code conversion carried out by the code morphing module 124 of the external storage device 102. This is, however, not restrictive at all, and three or a greater number of instruction sets for the respective processors may be subjected to the code conversion.

The above embodiments are to be considered in all aspects as illustrative and not restrictive. There may be many modifications, changes, and alterations without departing from the scope of the main characteristics of the present invention. All changes within the meaning and range of equivalency of the claims are therefore intended to be embraced therein.

The scope of the present invention is indicated by the appended claims, rather than by the foregoing description.

## Claims

1. An information processing system comprising an information processing terminal and an external storage device, which is connected with the information processing terminal in a mutually data communicable manner via a predetermined interface,
the information processing terminal comprising: multiple operating systems (OS) that respectively correspond to multiple instruction sets, which are different from each other and different from an instruction set of a processor included in the information processing terminal; and a code morphing module that converts codes constructed by each of the multiple instruction sets into codes executable by the processor of the information processing terminal,
the code morphing module comprising OS switchover means, which automatically switches over setting to an operating system that corresponds to predetermined information read from the external storage device and is selected among the multiple operating systems,
the code morphing module converting codes of the operating system selected by the OS switchover means into codes executable by the processor of the information processing terminal.

2. An information processing system in accordance with claim 1, wherein the external storage device has a general data memory area and a specific memory area, which is different from the data memory area and stores the predetermined information therein, and the OS switchover means switches over the setting to the selected operating system, based on the predetermined information stored in the specific memory area.

3. An information processing system in accordance with claim 2, wherein the external storage device comprises:
application program information reading means that reads information of a preset application program stored in a predetermined area of the data memory area; and
information writing means that writes the predetermined information, which is required for the switchover to the selected operating system, into the specific memory area, based on the read-out information of the preset application program.

4. An information processing system in accordance with claim 3, wherein the predetermined information required for the switchover to the selected operating system represents model of a processor that is capable of executing the preset application program.

5. An information processing system in accordance with claim 3, wherein the predetermined information required for the switchover to the selected operating system represents type of an operating system that is capable of executing the preset application program.

6. An information processing system in accordance with claim 2, wherein the predetermined interface is in conformity with an IEEE 1394 standard, and
the specific memory area is a configuration ROM (read only memory) area in conformity with an IEEE 1212 standard.

7. An information processing terminal that is connected with an external storage device in a mutually data communicable manner via a predetermined interface, the information processing terminal comprising:
multiple operating systems (OS) that respectively correspond to multiple instruction sets, which are different from each other and different from an instruction set of a processor included in the information processing terminal; and
a code morphing module that converts codes constructed by each of the multiple instruction sets into codes executable by the processor of the information processing terminal,
the code morphing module comprising OS switchover means, which automatically switches over setting to an operating system that corresponds to predetermined information read from the external storage device and is selected among the multiple operating systems,
the code morphing module converting codes of the operating system selected by the OS switchover means into codes executable by the processor of the information processing terminal.

8. An information processing terminal in accordance with claim 7, wherein the external storage device has a general data memory area and a specific memory area, which is different from the data memory area and stores the predetermined information therein, and the OS switchover means switches over the setting to the selected operating system, based on the predetermined information stored in the specific memory area.

9. An information processing terminal in accordance with claim 8, wherein the external storage device comprises:
application program information reading means that reads information of a preset application program stored in a predetermined area of the data memory area; and
information writing means that writes the predetermined information, which is required for the switchover to the selected operating system, into the specific memory area, based on the read-out information of the preset application program.

10. An information processing terminal in accordance with claim 9, wherein the predetermined information required for the switchover to the selected operating system represents model of a processor that is capable of executing the preset application program.

11. An information processing terminal in accordance with claim 9, wherein the predetermined information required for the switchover to the selected operating system represents type of an operating system that is capable of executing the preset application program.

12. An information processing terminal in accordance with claim 8, wherein the predetermined interface is in conformity with an IEEE 1394 standard, and
the specific memory area is a configuration ROM (read only memory) area in conformity with an IEEE 1212 standard.

13. A storage device, comprising:
a data memory area that stores preset data therein;
a specific memory area that stores predetermined information, which is used to specify an operating system that is capable of processing the preset data stored in the data memory area; and
an output module that outputs the predetermined information, which is stored in the specific memory area and is used to specify the operating system, to a preset destination.

14. An external storage device that is connected with an information processing terminal in a mutually data communicable manner via a predetermined interface,
the external storage device having a general data memory area and a specific memory area, which is different from the data memory area and stores predetermined information that is used to switch over setting to a selected operating system in the information processing terminal.

15. An external storage device in accordance with claim 14, the external storage device comprising:
application program information reading means that reads information of a preset application program stored in a predetermined area of the data memory area; and
information writing means that writes the predetermined information, which is required for the switchover to the selected operating system, into the specific memory area, based on the read-out information of the preset application program.

16. An external storage device in accordance with claim 15, wherein the predetermined information required for the switchover to the selected operating system represents model of a processor that is capable of executing the preset application program.

17. An external storage device in accordance with claim 15, wherein the predetermined information required for the switchover to the selected operating system represents type of an operating system that is capable of executing the preset application program.

18. An external storage device in accordance with claim 14, wherein the predetermined interface is in conformity with an IEEE 1394 standard, and
the specific memory area is a configuration ROM (read only memory) area in conformity with an IEEE 1212 standard.

19. A computer readable recording medium, in which an information processing terminal control program for controlling an information processing terminal, which is connected with an external storage device in a mutually data communicable manner via a predetermined interface, is recorded, the information processing terminal control program comprising:
a code conversion step that converts codes constructed by each of multiple instruction sets, which are different from each other and are also different from an instruction set of a processor included in the information processing terminal, into codes executable by the processor included in the information processing terminal,
the code conversion step automatically switching over setting to an operating system, which corresponds to predetermined information read from the external storage device and is selected among multiple operating systems that respectively correspond the multiple instruction sets.

20. A recording medium in accordance with claim 19, wherein the external storage device has a general data memory area and a specific memory area, which is different from the data memory area and stores the predetermined information therein, and
the code conversion step switches over the setting to the selected operating system, based on the predetermined information stored in the specific memory area.

21. A computer readable recording medium, in which an external storage device control program for controlling an external storage device, which is connected with an information processing terminal in a mutually data communicable manner via a predetermined interface, is recorded, the external storage device control program comprising:
application program information reading step that reads information of a preset application program stored in a predetermined area of the data memory area; and
information writing step that writes the predetermined information, which is required for a switchover to a selected operating system in the information processing terminal, into the specific memory area, based on the read-out information of the preset application program.

22. A recording medium in accordance with claim 21, wherein the predetermined information required for the switchover to the selected operating system represents model of a processor that is capable of executing the preset application program.

23. A recording medium in accordance with claim 21, wherein the predetermined information required for the switchover to the selected operating system represents type of an operating system that is capable of executing the preset application program.

24. A storage device having a data memory area, the storage device comprising at least:
a processor that executes a preset program stored in the data memory area;
data communication means that is used for data communication with an external device;
a code morphing module that converts codes constituting the preset program and being constructed by each of multiple instruction sets, which are different from each other and are also different from an instruction set of the processor, into codes executable by the processor;
multiple operating systems (OS) that respectively correspond to the multiple instruction sets; and
OS switchover means that automatically switches over setting to an operating system, which is suitable for execution of the preset program and is selected among the multiple operating systems, based on information on the preset program, which is stored in a predetermined area of the data memory area,
wherein the code morphing module converts codes of the operating system selected by the OS switchover means into codes executable by the processor, and the processor executes the code-converted operating system.

25. A storage device in accordance with claim 24, the storage device further comprising:
connection status detecting means that detects a connection status of the storage device with the external device and automatically sets, based on the detected connection status, either a dependent operation mode, in which the storage device is operated under control of the external device, or an independent operation mode, in which the storage device is independently operated by the processor.

26. A storage device in accordance with claim 24, wherein the preset program, which is executed by the processor, is stored in a specific memory area of the data memory area.

27. A storage device in accordance with claim 26, wherein the specific memory area is a protective area that allows storage contents to be rewritten only by specific rewiring means.

28. A computer readable recording medium, in which a storage device control program for controlling a storage device is recorded, the storage device control program comprising:
a data communication step that establishes data communication of the storage device with an external device; and
a code conversion step that converts codes constituting the preset program and being constructed by each of multiple instruction sets, which are different from each other and are also different from an instruction set of a processor included in the storage device, into codes executable by the processor of the storage device,
the code conversion step automatically switching over setting to an operating system, which is suitable for execution of the preset program and is selected among multiple operating systems respectively corresponding to the multiple instruction sets, based on information on the preset program, which is stored in a predetermined area of the data memory area,
the code conversion step then converting codes of the selected operating system into codes executable by the processor of the storage device.

29. A recording medium in accordance with claim 28, wherein the storage device control program further comprises:
a connection status detecting step that detects a connection status of the storage device with the external device and automatically sets, based on the detected connection status, either a dependent operation mode, in which the storage device is operated under control of the external device, or an independent operation mode, in which the storage device is independently operated by the processor.

30. A storage device having a data memory area, which includes a specific area for storing a storage device control program therein,
the storage device control program comprising:
a data communication step that establishes data communication of the storage device with an external device; and
a code conversion step that converts codes constituting a preset program and being constructed by each of multiple instruction sets, which are different from each other and are also different from an instruction set of a processor included in the storage device, into codes executable by the processor of the storage device,
the code conversion step automatically switching over setting to an operating system, which is suitable for execution of the preset program and is selected among multiple operating systems respectively corresponding to the multiple instruction sets, based on information on the preset program, which is stored in a predetermined area of the data memory area,
the code conversion step then converting codes of the selected operating system into codes executable by the processor of the storage device.

31. A storage device in accordance with claim 30, wherein the storage device control program further comprises:
a connection status detecting step that detects a connection status of the storage device with the external device and automatically sets, based on the detected connection status, either a dependent operation mode, in which the storage device is operated under control of the external device, or an independent operation mode, in which the storage device is independently operated by the processor.

32. A computer readable recording medium, in which a rewriting program is recorded,
the rewriting program comprising:
a rewriting step that rewrites storage contents of a protective area, which is included in a data memory area of an external storage device and represents a specific area for storing a preset program executed by a processor of the external storage device.
